**Europäisches Patentamt**

**European Patent Office**

**Office européen des brevets**

(19)

(11) Veröffentlichungsnummer : **0 628 843 B1**

# (12) EUROPÄISCHE PATENTSCHRIFT

(45) Veröffentlichungstag der Patentschrift :
05.04.95 Patentblatt 95/14

(51) Int. Cl.⁶ : **G02B 13/00**

(21) Anmeldenummer : **93810402.3**

(22) Anmeldetag : **03.06.93**

(54) **Modulares optisches Bildübertragungssystem.**

(43) Veröffentlichungstag der Anmeldung :
**14.12.94 Patentblatt 94/50**

(45) Bekanntmachung des Hinweises auf die
Patenterteilung :
**05.04.95 Patentblatt 95/14**

(84) Benannte Vertragsstaaten :
**AT CH DE FR GB IT LI**

(56) Entgegenhaltungen :
**WO-A-89/11112**
**DE-A- 2 919 205**
**DE-A- 3 535 028**
**US-A- 4 575 195**

(73) Patentinhaber : **Dr. CANZEK ENDOSKOPIE AG**
**Quellmattstrasse 3**
**CH-5035 Unterentfelden (CH)**

(72) Erfinder : **Canzek, Ludvik, Dr.**
**Quellmattstrasse 3**
**CH-5035 Unterentfelden (CH)**

EP 0 628 843 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein optisches Bildübertragungssystem nach dem Oberbegriff des Patentanspruchs 1.

Optische Bildübertragungssysteme dieser Art werden z.B. in Endoskopen oder diesen ähnlichen Geräten verwendet. Ein von einem Objektiv erzeugtes Bild, hier als Zwischenbild F1 bezeichnet, bildet ein optisches Bildübertragungssystem ins Zwischenbild F2 ab. In Endoskopen werden auch mehrere optische Bildübertragungssysteme nacheinander eingebaut und erzeugen das letzte Zwischenbild in der Okularbrennebene oder (mit oder ohne Zusatzoptik) auf einem Detektor (z.B. Film, CCD).

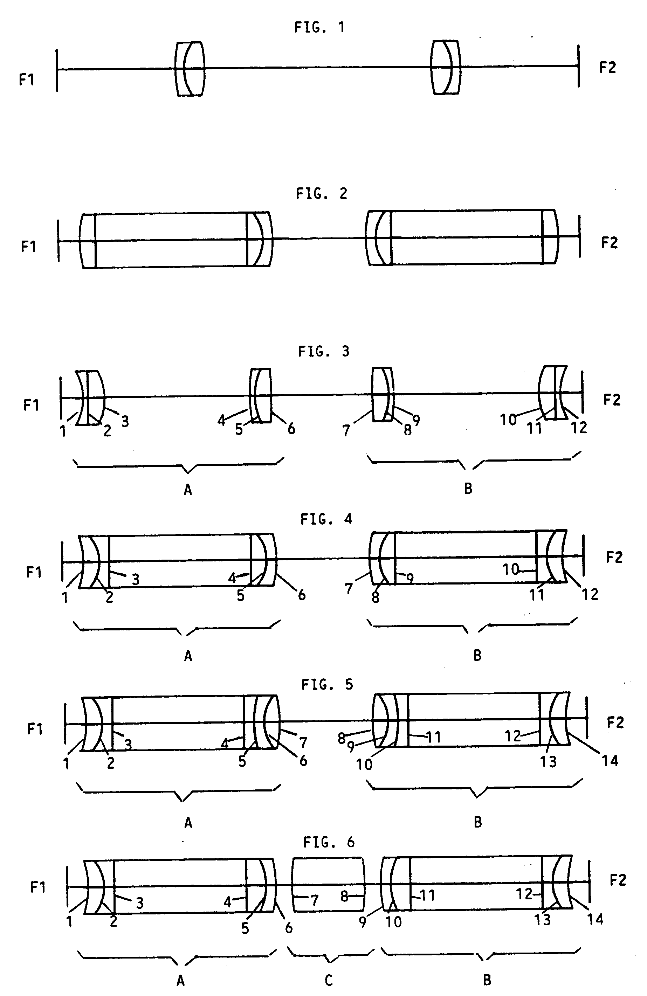

Optische Bildübertragungssysteme dieser Art sind bekannt. Fig.1 zeigt ein einfaches Beispiel, bei dem alle Bildfehler korrigierbar sind. Das System zeigt aber sehr starke Vignettierung, so dass es für Film und TV kaum brauchbar ist. Ein weiteres bekanntes System nach Fig.2 kann die Vignettierung beseitigen, lässt aber das Bildfeld nicht auskorrigieren. Die Fehler multiplizieren sich mit der Anzahl der optischen Bildübertragungssysteme im Gerät. Hier hilft man sich mit Kompensationsobjektiven und/oder Okularen. Sobald man aber die Anzahl der optischen Bildübertragungssysteme ändert, um die Baulänge oder Bildorientierung zu verändern, müssen ein anderes Objektiv und/oder Okular eingesetzt werden. Ein weiterer Nachteil ist, dass die nichtauskorrigierten Zwischenräume strenge Toleranzen verlangen und dass die Kompensationsmöglichkeit eines derartigen Objektivs auf eine bestimmte Grenze für die Anzahl der optischen Bildübertragungssysteme stösst.

Weiter sind optische Bildübertragungssysteme bekannt, z.B. gemäss DE 2619393 C2 oder DE 3534210 A1, wo das Bildfeld korrigierbar ist und die Vignettierung beseitigt werden kann. Ihr Nachteil ist aber, dass sie Linsen mit grosser Brennweite beinhalten, die schwer zentrierbar und deswegen teuer sind. Sie müssen auch sehr genau gefasst werden.

Es sind auch optische Bildübertragungssysteme bekannt, z.B. US-A-4,575,195 und WO-A-89/11112, wo alle Bildfehler für Anwendungen korrigierbar sind. Sie weisen aber asphärische Flächen aus. Systeme solcher Art sind sehr teuer.

Die Aufgabe der Erfindung ist, ein optisches Bildübertragungssystem zu berechnen bei dem alle Bildfehler korrigierbar sind, welches damit modular verwendbar ist, das keine freistehenden Linsen oder Kittlinsen mit grosser Brennweite hat, und wo alle optischen Elemente sphärische Oberflächen aufweisen.

Die Aufgabe der Erfindung wird bei einem optischen Bildübertragungssystem nach dem Oberbegriff des Patentanspruchs 1 durch die Merkmale des kennzeichnenden Teils des Patentanspruchs 1 gelöst. Bevorzugte Ausführungsbeispiele sind in den Ansprüchen 2 bis 11 angegeben.

Die Erfindung wird mit schematischen Zeichnungen in den Fig.1 bis Fig.6 erklärt. Hier sind einfachheitshalber alle Systeme symmetrisch aufgebaut und sehr viele Linsen verkittet. Es zeigen:

Fig.1 und 2 einen Teil des Standes der Technik,
Fig.3 ein erfindungsgemässes Beispiel ohne Stablinsen,
Fig.4 ein einfaches erfindungsgemässes Beispiel mit Stablinsen,
Fig.5 ein weiteres erfindungsgemässes Beispiel mit Stablinsen und
Fig.6 ein erfindungsgemässes Beispiel mit 3 Gliedern.

In den nachfolgenden Tabellen werden Daten für symmetrisch konstruierte optische Bildübertragungssysteme angegeben. Aus Symmetriegründen sind sie nur für ein Teilsystem angegeben.

Fig.3 zeigt das Beispiel gemäss der Tabelle 1.

| Tab.1 | Flächennummer | Radius | Abstand | Brechzahl |
|---|---|---|---|---|
| | 1 | -6.39 | 0.6 | 1.53 |
| | 2 | -83.70 | 1.0 | 1.79 |
| | 3 | -6.89 | 19.5 | 1 |
| | 4 | 17.18 | 0.6 | 1.71 |
| | 5 | 7.30 | 1.0 | 1.59 |
| | 6 | -37.01 | | 1 |

Hier sind: N+ =1.79 > N- =1.53 und F(FLD)=26.485>0, wobei mit F(FLD) die Brennweite der ersten Linsengruppe gemeint ist.

Fig.4 zeigt das Beispiel gemäss der Tabelle 2.

| Tab.2 | Flächennummer | Radius | Abstand | Brechzahl |
|---|---|---|---|---|
| | 1 | -22.8 | 1.0 | 1.82 |
| | 2 | -4.1 | 0.6 | 1.47 |
| | 3 | plan | 24.0 | 1.58 |
| | 4 | plan | 0.8 | 1.59 |
| | 5 | -5.7 | 0.6 | 1.74 |
| | 6 | -9.7 | | 1 |

Hier sind: N+ =1.82 > N- =1.47 und F(FLD)=19.574>0
Fig.5 zeigt das Beispiel gemäss der Tabelle 3.

| Tab.3 | Flächennummer | Radius | Abstand | Brechzahl |
|---|---|---|---|---|
| | 1 | -32.1 | 0.9 | 1.81 |
| | 2 | -3.6 | 0.7 | 1.57 |
| | 3 | plan | 19.5 | 1.55 |
| | 4 | plan | 0.6 | 1.53 |
| | 5 | 9.9 | 0.6 | 1.85 |
| | 6 | 3.0 | 1.0 | 1.835 |
| | 7 | -27.3 | | 1 |

Hier sind: N+ =1.81 > N- =1.57 und F(FLD)=23.658>0
Fig.6 zeigt das Beispiel gemäss der Tabelle 4.

| Tab.4 | Flächenradius | Radius | Abstand | Brechzahl |
|---|---|---|---|---|
| | 1 | -11.3 | 1.0 | 1.82 |
| | 2 | -3.0 | 0.6 | 1.47 |
| | 3 | plan | 21.1 | 1.58 |
| | 4 | plan | 0.8 | 1.59 |
| | 5 | -6.2 | 0.6 | 1.74 |
| | 6 | -13.8 | 0.1 | 1 |
| | 7 | 23.3 | | 1.58 |

Hier sind: N+ =1.82> N- =1.47 und F(FLD)=20.512>0

Die Teilsysteme der erfindungsgemässen optischen Bildübertragungssysteme von verschiedenen Umkehrlängen können miteinander oder mit Teilsystemen der bekannten optischen Bildübertragungssysteme so kombiniert werden, dass sie vergrössernd, verkleinernd oder nur bildumkehrend wirken. Man kann z.B. ein Teilsystem nach Fig.3 oder Fig.4 mit einem Teilsystem nach Fig.1, 2, 5 oder 6 kombinieren.

Optische Berechnungen zeigen, dass Systeme nach dieser Erfindung sehr gut auskorrigierbar und als modulare optische Bildübertragungssysteme einsetzbar sind. Sie weisen keine Linsen mit grossen Brennweiten auf und die Vignettierung lässt sich weitgehend beseitigen. Baut man optische Bildübertragungssysteme nach dieser Erfindung als symmetrische Systeme mit gekitteten Linsen, dann ist der Aufbau sehr einfach und die Produktion billig.

**Patentansprüche**

1. Optisches Bildübertragungssystem für Endoskope oder endoskopähnliche Geräte mit zwei Teilsystemen (A,B), die die Enden des Bildübertragungssystems bilden, wobei jedes Teilsystem eine erste positive Linsengruppe und eine zweite Linsengruppe aufweist, wobei die erste Linsengruppe eine Sammellinse mit einer Brechzahl N+ und eine Zerstreuungslinse mit einer im Vergleich zu N+ kleineren Brech- zahl N- aufweist, dadurch gekennzeichnet, daß alle optischen Elemente nur sphärische Flächen (1-14) aufweisen, und daß die zweite Linsengruppe eine Sammellinse und mindestens eine Zerstreuungslinse aufweist, wobei die Sammellinse einen kleineren Brechungsindex hat als wenigstens eine der Zerstreuungslinsen der zweiten Linsengruppe.

2. Optisches Bildübertragungssystem nach Anspruch 1, dadurch gekennzeichnet, daß es mindestens eine Stablinse, d.h. Linse deren axiale Dicke grösser als ihr Durchmesser ist, aufweist.

3. Optisches Bildübertragungssystem nach Anspruch 1, dadurch gekennzeichnet, daß die Teilsysteme aus zusammengekitteten optischen Elementen bestehen.

4. Optisches Bildübertragungssystem nach Anspruch 1, dadurch gekennzeichnet, daß zwischen den Teilsystemen (A,B) ein weiteres optisches Glied (C) angeordnet ist.

5. Optisches Bildübertragungssystem nach Anspruch 1, dadurch gekennzeichnet, daß die erste Linsengruppe jedes Teilsystems (A,B) aus nur zwei Linsen besteht und daß die sich zwischen den beiden Linsen befindende Oberfläche (2,11;2,13) konkav zur Außenfläche (1,12;1,14) ist.

6. Optisches Bildübertragungssystem nach Anspruch 1 bis 3, dadurch gekennzeichnet, daß die Brennweiten der Teilsysteme (A,B) verschieden sind und einen positiven Quotient bilden.

7. Optisches Bildübertragungssystem nach Anspruch 1, 2, 3, 5 und 6, dadurch gekennzeichnet, daß die zweite Linsengruppe in einem der Teilsysteme (A,B) mindestens drei Linsen aufweist.

8. Optisches Bildübertragungssystem nach dem Patentanspruch 1, gekennzeichnet durch folgende Daten:

| Flächennummer | Radius | Abstand | Brechzahl | Abbe-Zahl |
|---|---|---|---|---|
| 1 | −6.39 | 0.6 | 1.53 | 49 |
| 2 | −83.70 | 1.0 | 1.79 | 50 |
| 3 | −6.89 | 19.5 | 1 | |
| 4 | 17.18 | 0.6 | 1.71 | 30 |
| 5 | 7.30 | 1.0 | 1.59 | 51 |
| 6 | −37.01 | 12.3 | 1 | |
| 7 | 37.01 | 1.0 | 1.59 | 51 |
| 8 | −7.3 | 0.6 | 1.71 | 30 |
| 9 | −17.18 | 19.5 | 1 | |
| 10 | 6.89 | 1.0 | 1.79 | 50 |
| 11 | 83.70 | 0.6 | 1.53 | 49 |
| 12 | 6.39 | | 1 | |

9. Optisches Bildübertragungssystem nach dem Patentanspruch 1, gekennzeichnet durch folgende Daten:

| Flächennummer | Radius | Abstand | Brechzahl | Abbe-Zahl |
|---|---|---|---|---|
| 1 | -22.8 | 1.0 | 1.82 | 44 |
| 2 | -4.1 | 0.6 | 1.47 | 66 |
| 3 | plan | 24.0 | 1.58 | 41 |
| 4 | plan | 0.8 | 1.59 | 49 |
| 5 | -5.7 | 0.6 | 1.74 | 28 |
| 6 | -9.7 | 4.9 | 1 | |
| 7 | 9.7 | 0.6 | 1.74 | 28 |
| 8 | 5.7 | 0.8 | 1.59 | 49 |
| 9 | plan | 24.0 | 1.58 | 41 |
| 10 | plan | 0.6 | 1.47 | 66 |
| 11 | 4.1 | 1.0 | 1.82 | 44 |
| 12 | 22.8 | | 1 | |

10. Optisches Bildübertragungssystem nach dem Patentanspruch 1, gekennzeichnet durch folgende Daten:

| Flächennummer | Radius | Abstand | Brechzahl | Abbe-Zahl |
|---|---|---|---|---|
| 1 | -32.1 | 0.9 | 1.81 | 25 |
| 2 | -3.6 | 0.7 | 1.57 | 56 |
| 3 | plan | 19.5 | 1.55 | 64 |
| 4 | plan | 0.6 | 1.53 | 65 |
| 5 | 9.9 | 0.6 | 1.85 | 32 |
| 6 | 3.0 | 1.0 | 1.835 | 43 |
| 7 | -27.3 | 11.2 | 1 | |
| 8 | 27.3 | 1.0 | 1.835 | 43 |
| 9 | -3.0 | 0.6 | 1.85 | 32 |
| 10 | -9.9 | 0.6 | 1.53 | 65 |
| 11 | plan | 19.5 | 1.55 | 64 |
| 12 | plan | 0.7 | 1.57 | 56 |
| 13 | 3.6 | 0.9 | 1.81 | 25 |
| 14 | 32.1 | | 1 | |

11. Optisches Bildübertragungssystem nach dem Patentanspruch 1, gekennzeichnet durch folgende Daten:

| Flächennummer | Radius | Abstand | Brechzahl | Abbe-Zahl |
|---|---|---|---|---|
| 1 | -11.3 | 1.0 | 1.82 | 44 |
| 2 | -3.0 | 0.6 | 1.47 | 66 |
| 3 | plan | 21.1 | 1.58 | 41 |
| 4 | plan | 0.8 | 1.59 | 49 |
| 5 | -6.2 | 0.6 | 1.74 | 28 |
| 6 | -13.8 | 0.1 | 1 | |
| 7 | 23.3 | 10.6 | 1.58 | 41 |
| 8 | -23.3 | 0.1 | 1 | |
| 9 | 13.8 | 0.6 | 1.74 | 28 |
| 10 | 6.2 | 0.8 | 1.59 | 49 |
| 11 | plan | 21.1 | 1.58 | 41 |
| 12 | plan | 0.6 | 1.47 | 66 |
| 13 | 3.0 | 1.0 | 1.82 | 44 |
| 14 | 11.3 | | 1 | |

## Claims

1. Optical picture transmission system for endoscopes or endoscope-like devices having two partial systems (A,B) forming the ends of the picture transmission system, each partial system having a first positive lens cluster and a second lens cluster, the first lens cluster having a converging lens with a refractive index N+ and a diverging lens with a refractive index N-, which in comparison to N+ is smaller, characterized in that all optical elements only have spherical surfaces (1-14), and in that the second lens cluster has a converging lens and at least one diverging lens, the converging lens having a smaller refractive index than at least one of the diverging lenses of the second lens cluster.

2. Optical picture transmission system according to Claim 1, characterized in that it has at least one rod lens, that is to say a lens whose axial thickness is larger than its diameter.

3. Optical picture transmission system according to Claim 1, characterized in that the partial systems consist of optical elements which have been cemented together.

4. Optical picture transmission system according to Claim 1, characterized in that a further optical component (C) is arranged between the partial systems (A,B).

5. Optical picture transmission system according to Claim 1, characterized in that the first lens cluster of each partial system (A,B) only consists of two lenses, and in that the surface (2, 11; 2, 13) located between the two lenses is concave with respect to the outer surface (1, 12; 1, 14).

6. Optical picture transmission system according to Claims 1 to 3, characterized in that the focal lengths of the partial systems (A,B) are different and form a positive quotient.

7. Optical picture transmission system according to Claims 1, 2, 3, 5 and 6, characterized in that the second lens cluster in one of the partial systems (A,B) has at least three lenses.

8. Optical picture transmission system according to Patent Claim 1, characterized by the following data:

| Number of surfaces | Radius | Distance | Refractive index | Abbe dispersion index |
|---|---|---|---|---|
| 1 | -6.39 | 0.6 | 1.53 | 49 |
| 2 | -83.70 | 1.0 | 1.79 | 50 |
| 3 | -6.89 | 19.5 | 1 | |
| 4 | 17.18 | 0.6 | 1.71 | 30 |
| 5 | 7.30 | 1.0 | 1.59 | 51 |
| 6 | -37.01 | 12.3 | 1 | |
| 7 | 37.01 | 1.0 | 1.59 | 51 |
| 8 | -7.3 | 0.6 | 1.71 | 30 |
| 9 | -17.18 | 19.5 | 1 | |
| 10 | 6.89 | 1.0 | 1.79 | 50 |
| 11 | 83.70 | 0.6 | 1.53 | 49 |
| 12 | 6.39 | | 1 | |

9.  Optical picture transmission system according to Patent Claim 1, characterized by the following data:

| Number of surfaces | Radius | Distance | Refractive index | Abbe dispersion index |
|---|---|---|---|---|
| 1 | -22.8 | 1.0 | 1.82 | 44 |
| 2 | -4.1 | 0.6 | 1.47 | 66 |
| 3 | plan | 24.0 | 1.58 | 41 |
| 4 | plan | 0.8 | 1.59 | .49 |
| 5 | -5.7 | 0.6 | 1.74 | 28 |
| 6 | -9.7 | 4.9 | 1 | |
| 7 | 9.7 | 0.6 | 1.74 | 28 |
| 8 | 5.7 | 0.8 | 1.59 | 49. |
| 9 | plan | 24.0 | 1.58 | 41 |
| 10 | plan | 0.6 | 1.47 | 66 |
| 11 | 4.1 | 1.0 | 1.82 | 44 |
| 12 | 22.8 | | 1 | |

10.  Optical picture transmission system according to Patent Claim 1, characterized by the following data:

7

| Number of surfaces | Radius | Distance | Refractive index | Abbe dispersion index |
|---|---|---|---|---|
| 1 | -32.1 | 0.9 | 1.81 | 25 |
| 2 | -3.6 | 0.7 | 1.57 | 56 |
| 3 | plan | 19.5 | 1.55 | 64 |
| 4 | plan | 0.6 | 1.53 | 65 |
| 5 | 9.9 | 0.6 | 1.85 | 32 |
| 6 | 3.0 | 1.0 | 1.835 | 43 |
| 7 | -27.3 | 11.2 | 1 | |
| 8 | 27.3 | 1.0 | 1.835 | 43 |
| 9 | -3.0 | 0.6 | 1.85 | 32 |
| 10 | -9.9 | 0.6 | 1.53 | 65 |
| 11 | plan | 19.5 | 1.55 | 64 |
| 12 | plan | 0.7 | 1.57 | 56 |
| 13 | 3.6 | 0.9 | 1.81 | 25 |
| 14 | 32.1 | | 1 | |

11. Optical picture transmission system according to Patent Claim 1, characterized by the following data:

| Number of surfaces | Radius | Distance | Refractive index | Abbe dispersion index |
|---|---|---|---|---|
| 1 | -11.3 | 1.0 | 1.82 | 44 |
| 2 | -3.0 | 0.6 | 1.47 | 66 |
| 3 | plan | 21.1 | 1.58 | 41 |
| 4 | plan | 0.8 | 1.59 | 49 |
| 5 | -6.2 | 0.6 | 1.74 | 28 |
| 6 | -13.8 | 0.1 | 1 | |
| 7 | 23.3 | 10.6 | 1.58 | 41 |
| 8 | -23.3 | 0.1 | 1 | |
| 9 | 13.8 | 0.6 | 1.74 | 28 |
| 10 | 6.2 | 0.8 | 1.59 | 49 |
| 11 | plan | 21.1 | 1.58 | 41 |
| 12 | plan | 0.6 | 1.47 | 66 |
| 13 | 3.0 | 1.0 | 1.82 | 44 |
| 14 | 11.3 | | 1 | |

**Revendications**

1. Système optique de transmission des images pour des endoscopes ou des dispositifs similaires à un endoscope, comportant deux sous-systèmes (A,B) constituant les deux bouts du système optique de transmission des images, chaque sous-système étant muni d'un premier système de lentilles positive et d'un second système de lentilles, le premier système de lentilles comportant une lentille convergente d'une force de réfraction N+ et une lentille divergente d'une force de réfraction N- inférieure comparée à N+, caractérisé en ce que tous les éléments optiques ne présentent que des surfaces sphériques (1 à 14), et que le second système de lentilles comporte une lentille convergente.et au moins une lentille divergente, la lentille convergente ayant un indice de réfraction inférieure comparée à au moins une des lentilles divergentes du second système de lentilles.

2. Système optique de transmission des images selon la revendication 1, caractérisé en ce qu'il comporte au moins une lentille à barre, c'est-à-dire une lentille dont l'épaisseur axiale est plus grand que son diamètre.

3. Système optique de transmission des images selon la revendication 1, caractérisé en ce que les sous-systèmes sont composés des éléments optiques cimentés.

4. Système optique de transmission des images selon la revendication 1, caractérisé en ce qu'entre les sous-systèmes (A,B) est placé un élément optique supplémentaire (C).

5. Système optique de transmission des images selon la revendication 1, caractérisé en ce que le premier système de lentilles de chaque sous-systèmes (A,B) ne se compose que de deux lentilles et que la surface (2,11;2,13) placée entre les deux lentilles est concave à la face extérieure (1,12;1,14).

6. Système optique de transmission des images selon les revendications 1 à 3, caractérisé en ce que les focales des deux sous-systèmes (A,B) diffèrent et forment un quotient positif.

7. Système optique de transmission des images selon les revendications 1, 2, 3, 5 et 6, caractérisé en ce que le deuxième système de lentilles dans l'un des sous-systèmes (A,B) comporte au moins trois lentilles.

8. Système optique de transmission des images selon la revendication 1, caractérisé par les données suivantes:

| Numéro de la surface | rayon | distance | force de réfraction | coefficient d'Abbe |
|---|---|---|---|---|
| 1 | -6.39 | 0.6 | 1.53 | 49 |
| 2 | -83.70 | 1.0 | 1.79 | 50 |
| 3 | -6.89 | 19.5 | 1 | |
| 4 | 17.18 | 0.6 | 1.71 | 30 |
| 5 | 7.30 | 1.0 | 1.59 | 51 |
| 6 | -37.01 | 12.3 | 1 | |
| 7 | 37.01 | 1.0 | 1.59 | 51 |
| 8 | -7.3 | 0.6 | 1.71 | 30 |
| 9 | -17.18 | 19.5 | 1 | |
| 10 | 6.89 | 1.0 | 1.79 | 50 |
| 11 | 83.70 | 0.6 | 1.53 | 49 |
| 12 | 6.39 | | 1 | |

9. Système optique de transmission des images selon la revendication 1, caractérisé par les données sui-

vantes:

| Numéro de la surface | rayon | distance | force de réfraction | coefficient d'Abbe |
|---|---|---|---|---|
| 1 | -22.8 | 1.0 | 1.82 | 44 |
| 2 | -4.1 | 0.6 | 1.47 | 66 |
| 3 | plan | 24.0 | 1.58 | 41 |
| 4 | plan | 0.8 | 1.59 | 49 |
| 5 | -5.7 | 0.6 | 1.74 | 28 |
| 6 | -9.7 | 4.9 | 1 | |
| 7 | 9.7 | 0.6 | 1.74 | 28 |
| 8 | 5.7 | 0.8 | 1.59 | 49 |
| 9 | plan | 24.0 | 1.58 | 41 |
| 10 | plan | 0.6 | 1.47 | 66 |
| 11 | 4.1 | 1.0 | 1.82 | 44 |
| 12 | 22.8 | | 1 | |

10. Système optique de transmission des images selon la revendication 1, caractérisé par les données suivantes:

| Numéro de la surface | rayon | distance | force de réfraction | coefficient d'Abbe |
|---|---|---|---|---|
| 1 | -32.1 | 0.9 | 1.81 | 25 |
| 2 | -3.6 | 0.7 | 1.57 | 56 |
| 3 | plan | 19.5 | 1.55 | 64 |
| 4 | plan | 0.6 | 1.53 | 65 |
| 5 | 9.9 | 0.6 | 1.85 | 32 |
| 6 | 3.0 | 1.0 | 1.835 | 43 |
| 7 | -27.3 | 11.2 | 1 | |
| 8 | 27.3 | 1.0 | 1.835 | 43 |
| 9 | -3.0 | 0.6 | 1.85 | 32 |
| 10 | -9.9 | 0.6 | 1.53 | 65 |
| 11 | plan | 19.5 | 1.55 | 64 |
| 12 | plan | 0.7 | 1.57 | 56 |
| 13 | 3.6 | 0.9 | 1.81 | 25 |
| 14 | 32.1 | | 1 | |

11. Système optique de transmission des images selon la revendication 1, caractérisé par les données suivantes:

| Numéro de la surface | rayon | distance | force de réfraction | coefficient d'Abbe |
|---|---|---|---|---|
| 1 | -11.3 | 1.0 | 1.82 | 44 |
| 2 | -3.0 | 0.6 | 1.47 | 66 |
| 3 | plan | 21.1 | 1.58 | 41 |
| 4 | plan | 0.8 | 1.59 | 49 |
| 5 | -6.2 | 0.6 | 1.74 | 28 |
| 6 | -13.8 | 0.1 | 1 | |
| 7 | 23.3 | 10.6 | 1.58 | 41 |
| 8 | -23.3 | 0.1 | 1 | |
| 9 | 13.8 | 0.6 | 1.74 | 28 |
| 10 | 6.2 | 0.8 | 1.59 | 49 |
| 11 | plan | 21.1 | 1.58 | 41 |
| 12 | plan | 0.6 | 1.47 | 66 |
| 13 | 3.0 | 1.0 | 1.82 | 44 |
| 14 | 11.3 | | 1 | |

FIG. 1

FIG. 2

FIG. 3

FIG. 4

FIG. 5

FIG. 6